Europäisches Patentamt

European Patent Office

Office européen des brevets

(19)

(11) Numéro de publication : **0 022 082**
**B1**

(12) **FASCICULE DE BREVET EUROPÉEN**

(45) Date de publication du fascicule du brevet :
25.07.84

(21) Numéro de dépôt : 80810204.0

(22) Date de dépôt : 18.06.80

(51) Int. Cl.³ : **G 01 C 7/04,** G 01 M 5/00,
G 01 B 5/30

(54) **Appareil de mesure et d'enregistrement des déflections.**

(30) Priorité : 21.06.79 CH 5819/79

(43) Date de publication de la demande :
07.01.81 Bulletin 81/01

(45) Mention de la délivrance du brevet :
25.07.84 Bulletin 84/30

(84) Etats contractants désignés :
AT BE DE FR GB IT LU NL SE

(56) Documents cités :
CH-A- 568 559
DE-A- 1 955 786
FR-A- 1 552 070
FR-A- 2 076 423

(73) Titulaire : **Map SA.**
**Südbahnhofstrasse 14c**
**CH-3007 Berne Canton de Berne (CH)**

(72) Inventeur : **Gressin, Jean-Claude**
**Hostalenweg 110**
**CH-3037 Herrenschwanden BE (CH)**

(74) Mandataire : **Rochat, Daniel Jean et al**
**Bovard SA Ingénieurs-conseils ACP Optingenstrasse 16**
**CH-3000 Bern 25 (CH)**

Jouve, 18, rue St-Denis, 75001 Paris, France

## Description

La présente invention a pour objet un appareil de mesure et d'enregistrement des déflections d'une surface plane horizontale sous l'effet d'une charge concentrée, comprenant une poutre ridige, reposant sur ladite surface par des appuis, un ou plusieurs bras de mesure munis de palpeurs et articulés sur la poutre autour d'un axe horizontal transversal et des moyens de déplacement et de positionnement de la poutre susceptibles d'être reliés à un véhicule de charge.

Les appareils de ce genre sont utilisés notamment pour contrôler les routes. Le brevet FR-A-1 552 070 et le brevet CH-A-568 559 décrivent différentes constructions relatives à ces appareils. Ainsi, le brevet suisse précité a pour objet un perfectionnement destiné à permettre à ces appareils d'effectuer des mesures de déformation sur des revêtements de chaussée très résistants, c'est-à-dire avec lesquels l'amplitude de la déformation au point de charge est relativement faible tandis que la zone atteinte par la déformation s'étend sur une distance relativement grande du point de charge.

On connaît également par le mémoire allemand DE-A-19 55 786 une construction visant à contrôler les irrégularités d'une route et dans laquelle une poutre rigide est guidée et supportée sur la chaussée par des galets pivotant aux extrémités de balanciers articulés eux-mêmes aux extrémités de la poutre. Il s'agit d'une technique dans laquelle la mesure des déformations s'effectue de façon continue, mais cette technique ne permet pas d'atteindre les précisions de mesure qui sont nécessaires à l'heure actuelle pour contrôler certaines chaussées dont les revêtements sont très résistants.

Un des éléments dont il faut tenir compte pour adapter les déflectographes à la mesure de revêtements très durs concerne l'influence que l'appareil peut avoir sur le véhicule de charge qui doit être utilisé. Il est évident que l'on a intérêt à pouvoir utiliser un véhicule de charge de dimensions standard, par exemple un véhicule dont l'empattement ne dépasse pas une longueur de 4,5 m. En effet, s'il est nécessaire d'utiliser des véhicules de dimensions plus grandes, on rencontre des difficultés lors de la mesure de la déformation dans les tournants et, d'autre part, le coût du véhicule augmente considérablement.

La présente invention a pour but de réaliser un appareil du genre mentionné au début, appelé déflectographe, qui puisse être associé à un véhicule de charge de dimensions normales et qui permette de faire des mesures de précision sur des chaussées à revêtement dur.

Dans ce but, l'appareil est caractérisé en ce que les dits appuis comprennent, d'une part, deux appuis avant solidaires de la poutre et situés sur une même ligne droite perpendiculaire à l'axe longitudinal de l'appareil et d'autre part, deux appuis arrière écartés l'un de l'autre sur l'axe longitudinal de l'appareil, ces appuis arrière étant disposés aux deux extrémités d'un balancier, articulé au milieu de sa longueur sur l'extrémité arrière de la poutre disposé longitudinalement et dont la longueur est inférieure au double de la distance entre son point d'articulation et la dite ligne droite.

On va décrire ci-après, à titre d'exemple, une forme d'exécution de l'appareil selon l'invention en se référant au dessin annexé dont :

la figure 1 est une vue en plan de dessus montrant l'appareil disposé sous le châssis du véhicule de charge,

la figure 2 est une vue en élévation de l'appareil et

la figure 3 est un graphique explicatif montrant, de façon comparative, les déplacements de la poutre de l'appareil au cours de l'avance du véhicule de charge dans trois cas différents.

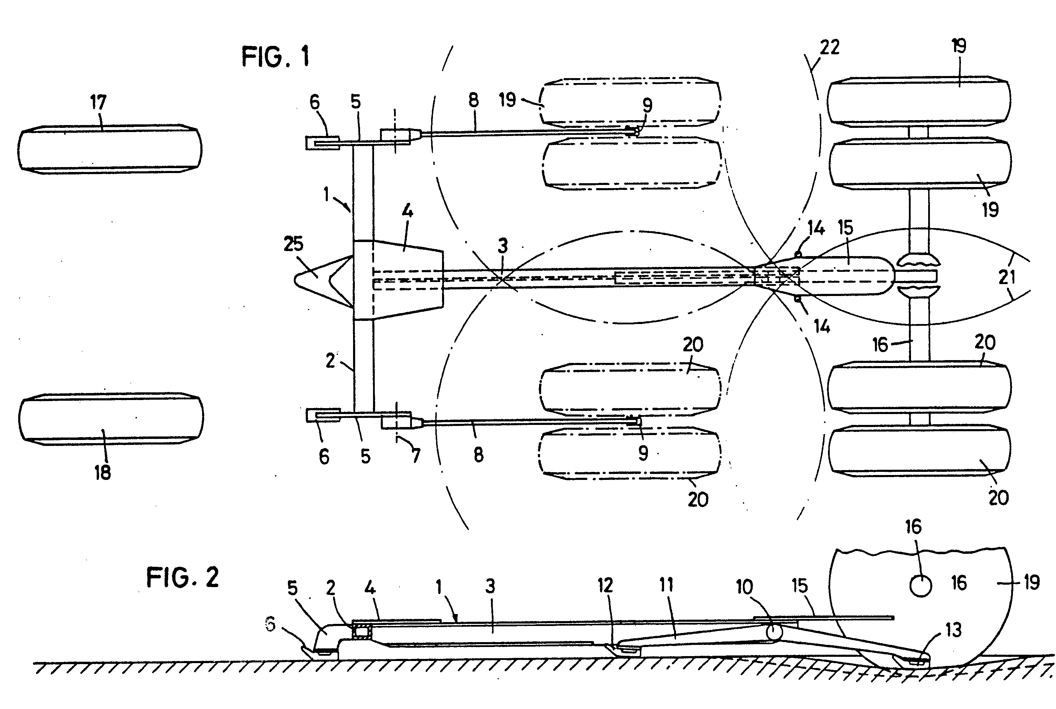

La construction générale est visible à la fig. 1. La poutre 1 est constituée d'une traverse 2 et d'une tige longitudinale 3. Ces éléments peuvent être constitués par des profilés métalliques, par exemple un profilé rectangulaire pour la traverse 2, comme on le voit à la fig. 2. La tige longitudinale 3 est solidarisée de la traverse avant 2 par une plaque de liaison 4 en avant de laquelle s'étend un élément d'attelage 25 qui sera relié au dispositif de positionnement et de déplacement. Celui-ci n'est pas représenté au dessin.

A chacune de ses deux extrémités, la traverse avant 2 est reliée à un élément de support longitudinal 5. Cet élément qui peut être une poutre profilée s'étend vers l'avant et vers l'arrière à partir de la traverse 2. A son extrémité avant, il porte un patin d'appui 6, tandis qu'à son extrémité arrière, il porte un élément fixe d'une articulation 7 ayant un axe horizontal, perpendiculaire à l'axe longitudinal de l'appareil. La partie rotative de cette articulation 7 est solidaire de l'extrémité avant d'un bras de mesure 8 dont l'extrémité arrière porte un palpeur 9. Un appareil de mesure et d'enregistrement (non représenté) sera monté sur l'élément de support 5. Cet appareil, de type connu en soi, permettra de mesurer en permanence l'angle que fait le bras de mesure 8 par rapport à la position de la poutre 1. Il s'agit d'un appareil de très haute précision capable de mesurer des angles extrêmement petits. Pour que la mesure soit fiable, il faut naturellement que la poutre 1 reste dans une position de référence pendant toute la durée de la mesure. Comme on l'a dit précédemment, cette poutre repose par son extrémité avant sur les deux appuis 6 et il est évidemment nécessaire que ces appuis soient situés dans une zone qui n'est pas déformée au cours de la mesure. Cette condition est d'autant plus facile à réaliser que les appuis 6 se trouvent en avant de la traverse 2 et, par conséquent, en avant également de l'axe d'articulation des bras de mesure. On peut donc utiliser des bras de mesure de longueur réduite, par exemple de la même longueur que dans les appareils antérieurs. Les patins 6 se trouvent à une distance plus grande du palpeur que dans les appareils connus antérieurement puisqu'ils étaient alors situés au droit des axes d'articulation.

Pour assurer la fiabilité des mesures et, par conséquent, l'immobilité de la poutre 1, la tige longitudinale 3 de cette poutre porte à son extrémité arrière une articulation 10 qui supporte un balancier 11. Cette pièce en forme de barre, également profilée, s'étend longitudinalement sous la tige 3. Si par exemple, la tige 3, appelée aussi la queue de la poutre se compose d'un profil en T ou en TT, le balancier peut être constitué par deux éléments longitudinaux parallèles reliés à leurs extrémités avant et arrière par des plaques transversales. Ces éléments embrassent la queue de la poutre et sont montés par l'intermédiaire de paliers qui peuvent être des paliers à billes sur des tourillons solidaires de la poutre. Les deux extrémités du balancier 11 se terminent par des patins 12 et 13, soit un patin avant et un patin arrière.

On voit encore à la fig. 1 deux éléments de guidage 14. Ceux-ci font partie du dispositif de postionnement et de déplacement. Normalement, ils sont fixes par rapport au châssis du véhicule de charge et servent à guider l'appareil quand il se déplace par rapport à ce véhicule. Les éléments de guidage 14 coopèrent avec la plaque arrière 15, solidaire de la tige 3 de la poutre.

A la fig. 1, on a représenté encore l'essieu arrière 16 du véhicule de charge ainsi que ses deux roues avant 17 et 18. L'essieu arrière comporte deux paires de roues jumelées désignées par 19 et 20. La position représentée en traits pleins à la fig. 1 représente la position de départ lors d'une opération de mesure. Comme on le voit, le patin arrière 13 du balancier 11 se trouve au droit de l'essieu 16. La poutre 1 est guidée à son extrémité arrière par les éléments 14 et les palpeurs 9 reposent sur la chaussée, sur un axe transversal, au droit des patins avant 12. Cela signifie donc que l'axe d'articulation 10 se trouve décalé vers l'arrière par rapport à l'extrémité arrière des bras de mesure 8 d'une quantité égale à la moitié de la longueur du balancier 11. Dans la position de départ, comme on le voit à la fig. 2, le patin arrière 13 qui se trouve au droit de l'essieu 16 repose dans une zone où la chaussée subit une déformation maximale. En revanche, le patin 12 doit se trouver dans une zone où la déformation est pratiquement nulle. De préférence, la longueur du balancier 11 sera telle que le patin 12 se trouve précisément au bord de la zone déformée.

Bien entendu, les zones de déformation maximale se trouvent entre les deux roues de chaque paire de roues jumelées. Elles s'étendent donc à chaque extrémité de l'essieu 16, entre les deux roues 20 et entre les deux roues 19, étant donné que, à ces deux endroits, la déformation est encore supérieure à celle que l'on observe au centre de l'essieu.

L'appareil ayant été placé sur le sol dans la position représentée à la fig. 1, le véhicule de charge est déplacé vers l'avant jusqu'à ce que les roues 19 et 20 parviennent dans la position représentée en traits mixtes à la fig. 1. Comme on le voit, dans cette position, l'axe de l'essieu 16 se trouve au droit du patin 12 et, par conséquent, au droit des palpeurs 9. La zone déformée, qui était représentée au départ par des cercles représentés en trait plein et désignés par 21, se trouve maintenant décalée vers l'avant et correspond à la zone englobée par les cercles en traits mixtes 22. Les palpeurs 9 qui se trouvaient entièrement en dehors de la zone déformée dans la position de départ se trouvent maintenant au centre des zones de déformation. Quant à la poutre 1, son déplacement est pratiquement négligeable. Comme on peut s'en rendre compte facilement, le patin 13 a tendance à se déplacer vers le haut, tandis que le patin 12 a tendance à se déplacer vers le bas. Le patin 12 occupe à la fin de la mesure une position qui est exactement symétrique à celle que le patin 13 occupe au début de la mesure et vice versa. Par raison de symétrie, l'axe 10 ne doit donc pas avoir bougé ou n'aura bougé que dans une mesure tout à fait négligeable.

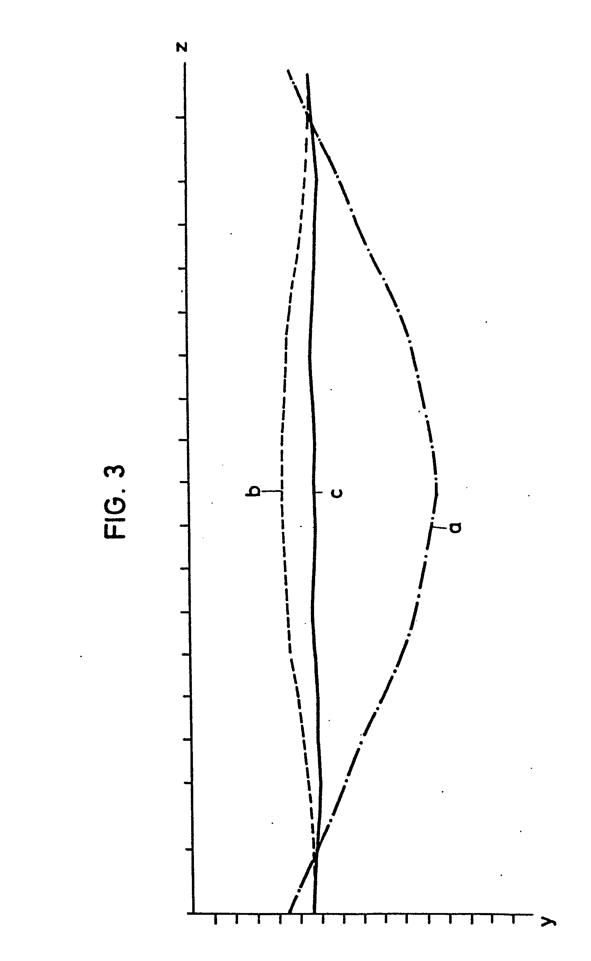

Pour montrer que les conditions de mesure sont fiables avec la disposition décrite, on a reproduit à la fig. 3 un graphique qui résulte d'enregistrements effectués sur des appareils réels. On voit que ce graphique comporte trois courbes qui sont repérées par rapport à deux axes orthogonaux dont l'axe des ordonnées représente les déflections mesurées à partir de zéro vers le bas tandis que l'axe des abscisses représente le déplacement du point de charge maximum par rapport à l'appareil. La courbe A est une courbe de comparaison. Elle représente le déplacement vertical d'un point qui correspond à l'axe d'articulation 10, dans le cas où, au lieu de reposer sur le balancier 11, la poutre reposerait sur un appui arrière unique, placé au droit de l'axe 10. L'appareil étant placé, comme à la fig. 1, le point de départ, c'est-à-dire l'extrémité gauche de la courbe A correspond à un déplacement minimum montrant que l'axe 10 se trouve déjà au droit d'une région légèrement déformée lors du début de la mesure. Au cours de l'avance du véhicule, l'axe 10 se déplacerait vers le bas jusqu'à atteindre un maximum de déplacement au moment où l'essieu 16 se trouve au-dessus de lui, après quoi le point d'appui remonterait pour se retrouver à la fin de la mesure à la même position qu'au début.

Par rapport à cette courbe, la courbe B représente le cas où on a prévu un balancier 11 dont la longueur est telle qu'au début de la mesure l'appui avant 12 se trouve nettement en dehors de la zone déformée. Dans ces conditions, on voit que durant le début du déplacement du véhicule de charge, le patin 12 reste immobile puisqu'il repose toujours sur une surface de sol qui n'est pas déformée, tandis que le patin 13 se déplace vers le haut au fur et à mesure que le point de charge s'éloigne vers l'avant de l'endroit où il repose sur le sol. De ce fait, le point 10 a tendance à se soulever jusqu'à ce qu'il atteigne un point de déformation minimum, après quoi il redescend pour se retrouver à la même hauteur qu'au début lorsqu'on se retrouve dans les conditions correspondant à la fin de la mesure. C'est ce que montre la courbe B. Finalement, la courbe C représente l'enregistrement du déplacement de l'axe d'articulation 10 lorsque la longueur du balancier 11 est adaptée aux conditions de mesure de façon que le patin 12 se trouve pratiquement au bord de la zone déformée, lorsqu'on se trouve dans les conditions du début de la mesure. Dans ces conditions, comme on le voit, l'axe d'articulation 10 ne subit pratiquement aucun déplacement en hauteur durant toute la mesure. Ainsi, on peut dire que les courbes de déformation enregistrées sont des courbes absolument fiables, alors que, dans le cas d'un balancier de longueur correspondant à la courbe B par exemple, seuls les deux points extrêmes seraient des points fiables. La mesure permettrait, dans ce cas, de connaître la déformation totale au point de charge maximum, mais ne permettrait pas d'avoir avec la même précision toute la séquence des déformations aux points intermédiaires. On a constaté néanmoins que des mesures ponctuelles de ce genre permettraient tout de même d'obtenir des résultats utiles et intéressants.

Bien que les patins soient solidaires du balancier dans la forme d'exécution décrite, on pourrait envisager la réalisation de balanciers comportant des patins réglables, ce qui permettrait d'ajuster les conditions de fonctionnement de l'appareil selon la qualité de la chaussée sur laquelle on effectue les mesures.

## Revendications

1. Appareil de mesure et d'enregistrement des déflections d'une surface plane horizontale sous l'effet d'une charge concentrée, comprenant une poutre rigide (1) reposant sur ladite surface par des appuis, un ou plusieurs bras de mesure (8), munis de palpeurs (9) et articulés sur la poutre autour d'un axe horizontal (7) transversal et des moyens de déplacement et de positionnement de la poutre susceptibles d'être reliés à un véhicule de charge, caractérisé en ce que lesdits appuis comprennent, d'une part, deux appuis avant (6) solidaires de la poutre et situés sur une même ligne droite perpendiculaire à l'axe longitudinal de l'appareil, et d'autre part, deux appuis arrière (12, 13) écartés l'un de l'autre sur l'axe longitudinal de l'appareil, ces appuis arrière étant disposés aux deux extrémités d'un balancier (11) articulé au milieu (10) de sa longueur sur l'extrémité arrière de la poutre, disposé longitudinalement et dont la longueur est inférieure au double de la distance entre son point d'articulation et la dite ligne droite.

2. Appareil selon la revendication 1, caractérisé en ce que la poutre rigide (1) comporte une barre transversale (2) et une tige (3) disposée selon l'axe longitudinal de l'appareil, et en ce que les appuis avant (6) sont situés en avant de la barre transversale (2) tandis que les bras de mesure (8) sont articulés sur la poutre (1) en arrière des appuis avant (6).

3. Appareil selon la revendication 2, caractérisé en ce que la poutre (1) comporte, aux deux extrémités de la barre transversale, des éléments de support longitudinaux (5), chacun desdits éléments de support comportant à son extrémité avant un appui (6) et à son extrémité arrière une articulation (7) d'un des bras de mesure.

4. Appareil selon la revendication 3, caractérisé en ce que les palpeurs (9) sont montés à l'extrémité arrière des bras de mesure et reposent sur le sol, la longueur des bras de mesure étant telle que les palpeurs se trouvent au droit de l'appui situé à l'extrémité avant du balancier.

5. Appareil selon l'une quelconque des revendications 1 à 4, caractérisé en ce que les appuis sont constitués par des patins.

6. Appareil selon la revendication 3, caractérisé en ce que les éléments de support longitudinaux portent des appareils qui mesurent et enregistrent la position angulaire des bras par rapport à la poutre.

## Claims

1. Apparatus for measuring and recording deflections of a horizontal plane surface under the effect of a concentrated load, comprising a rigid beam (1) resting on said surface via supports, one or more measuring arms (8), equipped with feelers (9) and articulated on the beam about a transverse horizontal axis (7), and means for displacing and positioning the beam, capable of being connected to a load-bearing vehicle, characterized in that the said supports comprise, on the one hand, two front supports (6) integral with the beam and situated on a single straight line perpendicular to the longitudinal axis of the apparatus and, on the other hand, two rear supports (12, 13) separated from one another on the longitudinal axis of the apparatus, these rear supports being disposed at the two ends of a rocking-lever (11) articulated at the middle (10) of its length on the rearward end of the beam, disposed longitudinally, and the length of which is less than double the distance between its point of articulation and the said straight line.

2. Apparatus according to claim 1, characterized in that the rigid beam (1) comprises a transverse bar (2) and a rod (3) disposed along the longitudinal axis of the apparatus, in that the front supports (6) are situated in front of the transverse bar (2) whereas the measuring arms (8) are articulated on the beam (1) behind the front supports (6).

3. Apparatus according to claim 2, characterized in that the beam (1) comprises, at the two ends of the transverse bar, longitudinal supporting elements (5) each of the said supporting elements comprising at its front end a support (6) and at its rearward end an articulation (7) of one of the measuring arms.

4. Apparatus according to claim 3, characterized in that the feelers (9) are mounted at the rearward end of the measuring arms and resting on the ground, the length of the measuring arms being such that the feelers are situated aligned with the support situated at the front end of the rocking lever.

5. Apparatus according to any one of the claims 1 to 4, characterized in that the supports are constituted by runners.

6. Apparatus according to claim 3, characterized in that the longitudinal supporting elements bear apparatuses which measure and record the angular position of the arms relative to the beam.

**Ansprüche**

1. Gerät zum Messen und Aufzeichnen von Verformungen einer horizontalen ebenen Fläche unter der Einwirkung einer konzentrierten Belastung, mit einem steifen Stab, der mittels Auflagern auf der besagten Fläche ruht, einem oder mehreren Messarmen (8), die mit Fühlern (9) ausgerüstet und an dem Stab angelenkt sind, um eine horizontale Querachse (7), und mit Mitteln zur Verschiebung und Positionierung des Stabes, die geeignet sind zur Verbindung mit einem Belastungsfahrzeug, dadurch gekennzeichnet, dass die besagten Auflager einerseits zwei Vorderauflager (6) aufweisen, die fest mit dem Stab verbunden und auf einer gleichen Geraden liegen, die zur Längsachse des Gerätes winkelrecht steht, und andererseits zwei hintere Auflager (12, 13), die längs der Längsachse des Gerätes in Abstand voneinander gelegen sind und die an den beiden Enden eines Waagebalkens (11) gelegen sind, der in seiner Längsmitte (10) auf dem hinteren Ende des Stabes angelenkt ist, wobei dieser Waagebalken längs angeordnet ist und eine Länge hat, die geringer ist als das doppelte der Distanz zwischen seiner Gelenkachse und der besagten Geraden.

2. Gerät nach Anspruch 1, dadurch gekennzeichnet, dass der steife Stab (1) eine Querstange (2) und eine Längsstange (3) aufweist, die in der Längsachse des Gerätes angeordnet ist, dass die vorderen Auflager (6) vor der Querstange (2) angeordnet sind, wogegen die Messarme (8) auf dem Stab (1) hinter den vorderen Auflagern (6) angelenkt sind.

3. Gerät nach Anspruch 2, dadurch gekennzeichnet, dass der Stab (1) an den beiden Enden der Querstange längsverlaufende Stützelemente (5) hat, die je an ihrem vorderen Ende ein Auflager (6) und an ihrem hinteren Ende eine Gelenkstelle (7) für einen der Messarme haben.

4. Gerät nach Anspruch 3, dadurch gekennzeichnet, dass die Fühler am hinteren Ende der Messarme angebracht sind und auf dem Boden ruhen, wobei die Länge der Messarme so gewählt ist, dass die Fühler sich auf Höhe des Auflagers befinden, die am vorderen Ende des Waagebalkens gelegen ist.

5. Gerät nach einem der Ansprüche 1 bis 4, dadurch gekennzeichnet, dass die Auflager aus Gleitsuchern bestehen.

6. Gerät nach Anspruch 3, dadurch gekennzeichnet, dass die Längsstützelemente Apparate tragen, welche die Winkellage der Arme inbezug auf den Stab messen und aufzeichnen.

FIG. 1

17

6  5    8   19         9          22          19

25        1                    3         14  15        19

4                                              21

2                                              16

18                                20    20

6  5  7   8    9              20          20

0 022 082

FIG. 2

16

5  2  4  1  3   12   11   10  15        16   19

6                              13

FIG. 3